# EUROPÄISCHE PATENTSCHRIFT

(11) **EP 2 554 881 B1**
(45) Veröffentlichungstag und Bekanntmachung des Hinweises auf die Patenterteilung: **15.10.2014**
(21) Anmeldenummer: 12005435.8
(22) Anmeldetag: 26.07.2012
(51) Int. Cl.: F16J 15/34, F27B 7/24

(54) **Hochtemperaturdichtung**
Joint haute température
High temperature seal

(30) Priorität: 05.08.2011 AT 11342011
(43) Veröffentlichungstag der Anmeldung: 06.02.2013
(73) Patentinhaber: Andritz AG, 8045 Graz (AT)
(72) Erfinder: Pauli, Heinrich, Ing., 8010 Graz (AT); Plienegger Wolfgang, Dipl.Ing., 8102 Semriach (AT); Schiffer, Gottfried, Ing., 8010 Graz (AT)
(74) Vertreter: Schweinzer, Friedrich

(56) Entgegenhaltungen:
- EP-A1- 1 398 549
- EP-A2- 0 255 662
- EP-A2- 0 992 722
- DE-A1- 3 141 512
- DE-A1- 4 035 129

## Beschreibung

Die Erfindung betrifft eine Hochtemperaturdichtung zwischen einem um eine Mittelachse rotierenden Teil und einem feststehenden Teil mit einem Dichtring und einem Gegenring, wobei der Dichtring eine Neigung aufweist und mit dem Gegenring eine Gleit- und Dichtfläche bildet, die im rechten Winkel zur Mittelachse des rotierenden Teils steht. Weiters betrifft die Erfindung einen Drehrohrreaktor mit einer Hochtemperaturdichtung.

Bei Apparaten, bei denen im Betrieb hohe Temperaturen auftreten, z.B. Drehrohrreaktoren oder Trommeltrocknern, besteht immer wieder das Problem einer Abdichtung der rotierenden Teile, insbesondere der Trommel, gegen die feststehenden Teile, wie entsprechende Zuführstutzen oder Abdeckungen für Gase. So wird oft Falschluft durch Spalte eingesaugt und die Trommel muss gegenüber der Umgebung einen geringen Unterdruck aufweisen. Diese Falschluft verringert die Wärmekapazität der Trocknungs- oder Heizgase und erfordert einen zusätzlichen Heizaufwand. Bei diesen hohen Temperaturen werden meist Keramikdichtungen eingesetzt, die jedoch brüchig sind und nur schwer ausgetauscht werden können. Auch ist aus der gattungsgemäßen EP 1 398 549 A1 eine Gleitringdichtung zur Abdichtung von Bauteilen mit hoher Temperaturbeaufschlagung bekannt. Der Einsatz für höhere Temperaturen (bis zu 1200 °C) ist allerdings stark beschränkt, da hier elastische Dichtkörper zum Einsatz kommen. Weiters zeigt u.a. die EP 0 992 722 A2 eine Gleitringdichtung zur Abdichtung von drehenden Teilen gegen Flüssigkeiten, wobei hier Gleitring und Gegenring aus Kohle bzw. Siliciumcarbid bestehen. Die EP 0 255 662 A2 zeigt eine Dichtung u.a. für Trommelöfen. Hier läuft ein stählemer Dichtungsring auf einem metallischen Gegenring. Die große Dichtfläche ergibt auch eine hohe Reibung. Die DE 40 35 129 A1 zeigt eine Gleitringdichtung für Drehrohrtrommeln, bei der ein profilierter Dichtring in einer konträr geformten Nut läuft. Auch hier tritt eine hohe Reibung auf.

Ziel der Erfindung ist es daher ein Dichtungssystem für die Anwendung bei hohen Temperaturen zu schaffen, das stabil ist und bei allen Temperaturen gut abdichtet.

Die Erfindung ist daher dadurch gekennzeichnet, dass der Dichtring und Gegenring aus Metall bestehen, wobei der Dichtring feststeht und der am rotierenden Teil befestigte Gegenring um die Mittelachse des rotierenden Teils rotiert, wobei der Dichtring aus einem hochwertigen Stahl und der Gegenring aus einer CuNi-Legierung bestehen kann. Dadurch können die Teile auch bei hohen Temperaturen aufeinander gleiten ohne Spalte zu lassen und es können die Kräfte auf den Dichtring sehr gut eingestellt werden.

Eine günstige Weiterbildung der Erfindung ist **dadurch gekennzeichnet, dass** der Dichtring durch einen Anstellring gegen den Gegenring angedrückt wird. Durch diesen Anstellring lässt sich die Anpresskraft gut kontrollieren.

Eine günstige Ausgestaltung der Erfindung ist dadurch gekennzeichnet, dass der Dichtring, insbesondere über einen Anstellring, durch einen Kompensator an den Gegenring gedrückt wird. Durch die Vorspannung kann der Anpressdruck entsprechend reguliert werden und es können auch axiale Bewegungen sowie Temperaturdehnungen zwischen drehendem und feststehendem Teil ausgeglichen werden.

Eine vorteilhafte Ausgestaltung der Erfindung ist **dadurch gekennzeichnet, dass** der Dichtring am Anstellring verklemmt ist. Dadurch wird sichergestellt, dass der Dichtring am Gegenring gleitet.

Die Erfindung betrifft auch einen Drehrohrreaktor mit einer erfindungsgemäßen Hochtemperaturdichtung. Der Drehrohrreaktor ist **dadurch gekennzeichnet, dass** der Gegenring an der Reaktortrommel befestigt ist und diese im Betrieb rotiert, wobei der Dichtring vorteilhafterweise mit dem feststehenden Teil verbunden ist.

Besonders günstig ist es, wenn beim Drehrohrreaktor zumindest an beiden Enden eine Hochtemperaturdichtung vorgesehen ist.

Die Erfindung wird nun anhand der Zeichnungen beispielhaft beschrieben, wobei
Fig. 1 eine Ansicht einer erfindungsgemäßen Dichtanordnung,
Fig. 2 einen Schnitt durch eine erfindungsgemäße Dichtanordnung,
Fig. 3 eine Ansicht eines Drehrohrreaktors mit erfindungsgemäßer Hochtemperaturdichtung und
Fig. 4a, b und c Details der Dichtanordnung beim Drehrohrreaktor der Fig. 3 darstellen.

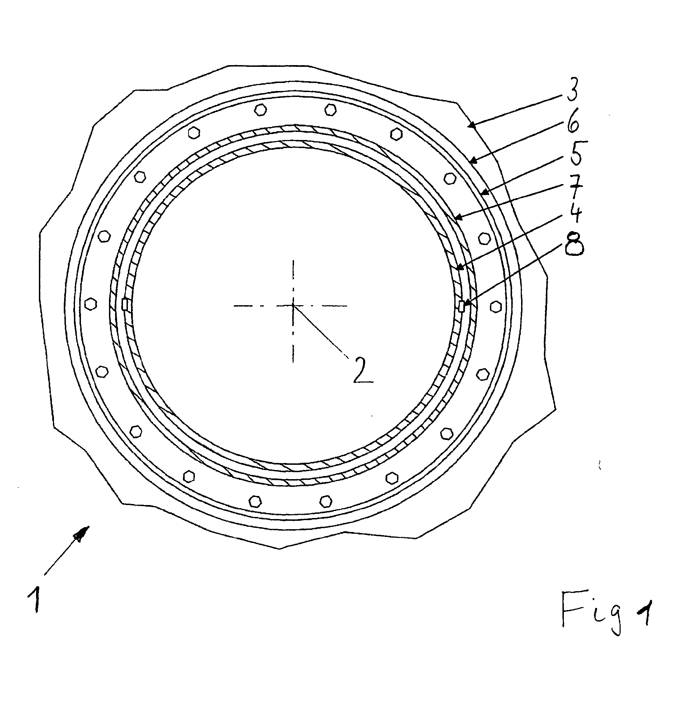

Fig. 1 zeigt eine erfindungsgemäße Anordnung einer Hochtemperaturdichtung 1 zwischen einem um eine Mittelachse 2 rotierenden Teil 3, der z.B. ein Drehrohrreaktor oder eine beheizte Trockentrommel sein kann, und einem feststehenden Teil 4, beispielsweise eines Zufuhrstutzens für eine Materialzufuhr oder eines Anschlusses zur Zufuhr eines Heizgases, z.B. Rauchgas. Hierbei wird ein Dichtring 5 am stehenden Teil 4 gegen einen Gegenring 6 am rotierenden Teil 3 gedrückt. Ein Kompensator 7 dient zur Vorspannung und zum Ausgleich von axialen Bewegungen und Dehnungen. Durch Passfedern 8 (z. B. zwei oder mehr über den Umfang verteilt) wird verhindert, dass der Kompensator 7 das Drehmoment aufnehmen muss, das durch die Reibkraft des Dichtrings 5 auf der Gleitfläche 9 des Gegenrings 6 entsteht.

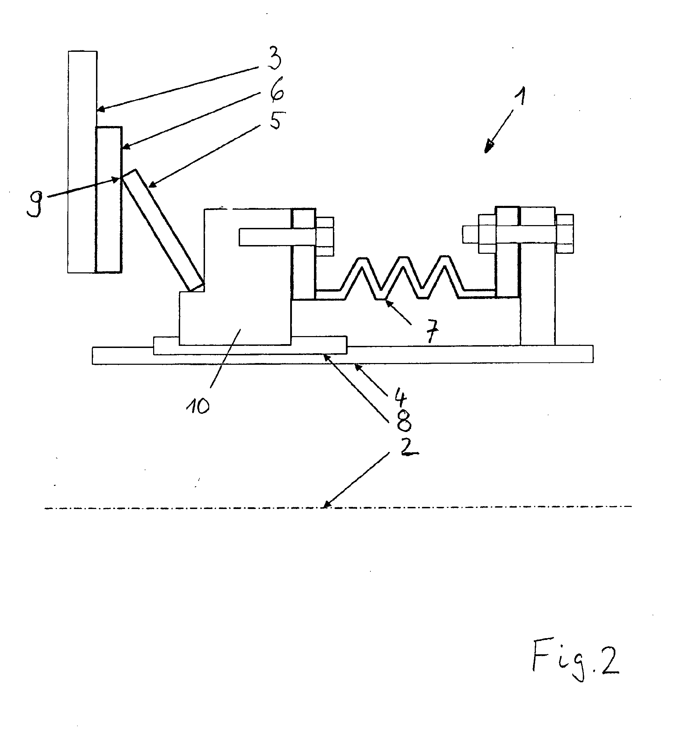

In Fig. 2 ist ein Schnitt durch eine erfindungsgemäße Hochtemperaturdichtung 1 dargestellt, wobei gleiche Teile mit gleichen Bezugszeichen versehen sind. Das Kernelement der Hochtemperaturdichtung 1 ist der Dichtring 5, der beispielsweise aus einem hochwertigen Stahl besteht. Der Dichtring 5 befindet sich am feststehenden Teil 4 und dreht daher nicht. Der Kompensator 7 ist vorzugsweise als Metallkompensator ausgeführt und drückt den Dichtring 5 über einen Anstellring 10 an den Gegenring 6. Der Kompensator 7 wird dazu entsprechend vorgespannt. Zusätzlich gleicht er noch Bewegungen in axialer Richtung sowie Temperaturdehnungen zwischen rotierendem Teil 3 und feststehendem Teil 4 aus. Der Gegenring 6 besteht beispielsweise aus einer weichen CuNi-Legierung, ist am rotierenden Teil 3 befestigt und bildet mit dem Dichtring 5 die Gleit- und Dichtfläche 9. Da die Gleit- und Dichtfläche 9 im rechten Winkel zur Mittelachse 2 steht, werden radiale Bewegungen und Temperaturdehnungen über die Gleit- und Dichtfläche 9 ausgeglichen. Durch die Vorspannkraft des Kompensators 7 verändert der Dichtring 5 seine Neigung und der Innendurchmesser verkleinert sich geringfügig. Hat nun der Werkstoff des Dichtrings 5 einen kleineren Temperaturausdehnungskoeffizienten als der Werkstoff des Anstellrings 10, so erfolgt ein Verklemmen des Dichtrings 5 am Anstellring 10. Dadurch wird sichergestellt, dass der Dichtring 5 am Gegenring 6 anstelle am Anstellring 10 gleitet.

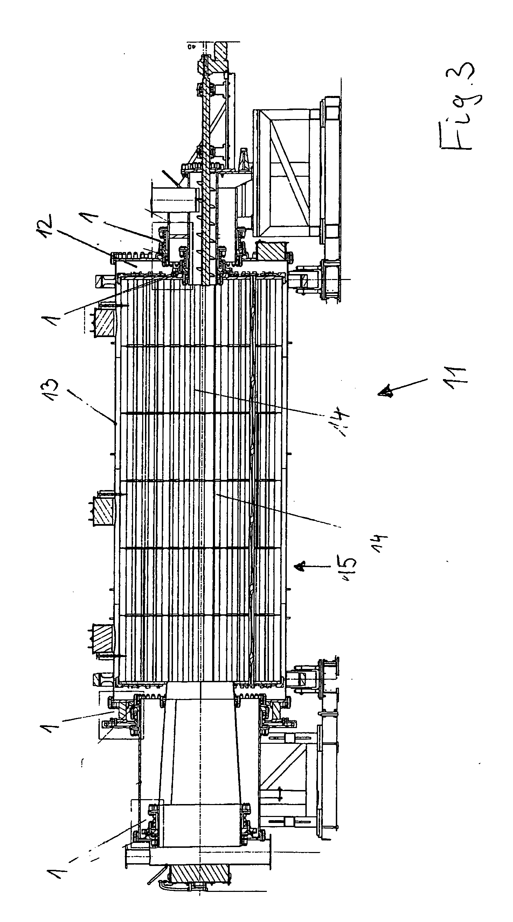

Fig. 3 zeigt nun einen Drehrohrreaktor 11, der durch Rauchgas beheizt wird, wobei das Rauchgas einer Kammer 12 zugeführt und über einen Doppelmantel 13 bzw. Heizrohre 14 Material im Innenraum der Trommel 15 beheizt. Das Rauchgas hat dabei Temperaturen von bis zu 450 °C während das Material im Innenraum der Trommel 15 auf bis zu ca. 400 °C erwärmt wird. Um die Dichtheit zu gewährleisten sind an beiden Enden der Trommel 15 jeweils zwei Hochtemperaturdichtungen 1 vorgesehen.

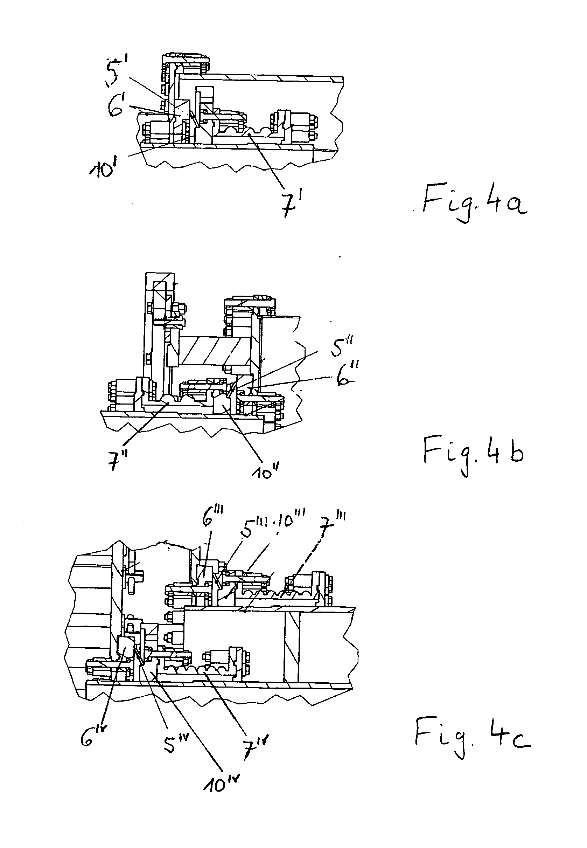

Fig. 4 a zeigt die Einbausituation im Bereich des Materialaustrags, wobei der Dichtring 5' über einen Kompensator 7' und einen Anstellring 10' an den Gegenring 6' angedrückt wird. Die Situation am äußeren Umfang des Drehrohrreaktors 11 ist in Fig. 4b dargestellt. Hier wird der Dichtring 5" über einen Kompensator 7" und einen Anstellring 10" an den Gegenring 6" angedrückt. In Fig. 4c ist die Einbausituation bei der Materialzufuhr gezeigt, wobei hier gleich zwei erfindungsgemäße Hochtemperaturdichtungen 1 zum Einsatz kommen. Bei der äußeren Dichtung wird der Dichtring 5"' über einen Kompensator 7"' und einen Anstellring 10"' an den Gegenring 6"' angedrückt, während bei der inneren Dichtung, die den Materialzufuhrstutzen umgibt, der Dichtring 5^{IV} über einen Kompensator 7^{IV} und einen Anstellring 10^{IV} an den Gegenring 6^{IV} angedrückt wird.

Neben Drehrohrreaktoren und Trommeltrocknern ist die erfindungsgemäße Hochtemperaturdichtung bei allen Anwendungen einsetzbar, bei denen rotierende Teile bei hohen Temperaturen (über 80 bis 100 °C und bis zu 1200 °C) gegenüber feststehenden Teilen abgedichtet werden müssen.

## Patentansprüche

1. Hochtemperaturdichtung zwischen einem um eine Mittelachse (2) rotierenden Teil (3) und einem feststehenden Teil (4) mit einem Dichtring (5) und einem Gegenring (6), wobei der Dichtring (5) eine Neigung aufweist und mit dem Gegenring (6) eine Gleit- und Dichtfläche (9) bildet, die im rechten Winkel zur Mittelachse (2) des rotierenden Teils (3) steht, **dadurch gekennzeichnet, dass** der Dichtring (5) und Gegenring (6) aus Metall bestehen, wobei der Dichtring (5) feststeht und der am rotierenden Teil (3) befestigte Gegenring (6) um die Mittelachse (2) des rotierenden Teils (3) rotiert.

2. Hochtemperaturdichtung nach Anspruch 1, **dadurch gekennzeichnet, dass** der Dichtring (5) aus einem hochwertigen Stahl und der Gegenring (6) aus einer CuNi-Legierung besteht.

3. Hochtemperaturdichtung nach Anspruch 1 oder 2, **dadurch gekennzeichnet, dass** der Dichtring (5) durch einen Anstellring (10) gegen den Gegenring (6) angedrückt wird.

4. Hochtemperaturdichtung nach einem der Ansprüche 1 bis 3, **dadurch gekennzeichnet, dass** der Dichtring (5), insbesondere über einen Anstellring (10), durch einen Kompensator (7) an den Gegenring (6) gedrückt wird.

5. Hochtemperaturdichtung nach einem der Ansprüche 1 bis 4, **dadurch gekennzeichnet, dass** der Dichtring (5) am Anstellring (10) verklemmt ist.

6. Drehrohrreaktor mit einer Hochtemperaturdichtung nach einem der Ansprüche 1 bis 5, **dadurch gekennzeichnet, dass** der Gegenring (6) an der Reaktortrommel (15) befestigt ist und diese im Betrieb rotiert.

7. Drehrohrreaktor nach Anspruch 6, **dadurch gekennzeichnet, dass** der Dichtring (5) mit dem feststehenden Teil (4) verbunden ist.

8. Drehrohrreaktor nach Anspruch 6 oder 7, **dadurch gekennzeichnet, dass** zumindest an beiden Enden eine Hochtemperaturdichtung (1) vorgesehen ist.

## Claims

1. High-temperature seal between a part (3) rotating round a central axis (2) and a stationary part (4) with a sealing ring (5) and a counter-ring (6), where the sealing ring (5) is inclined and, together with the counter-ring, forms a sliding and sealing surface (9) that is at right angles to the central axis (2) of the rotating part (3), **characterized by** the sealing ring (5) and the counter-ring (6) being made of metal, where the sealing ring (5) is stationary and the counter-ring (6) secured to the rotating part (3) rotates round the central axis (2) of the rotating part (3).

2. High-temperature seal according to Claim 1, **characterized by** the sealing ring (5) being made of a high-grade steel and the counter ring (6) being made of a CuNi alloy.

3. High-temperature seal according to Claim 1 or 2, **characterized by** the sealing ring (5) being pressed against the counter-ring (6) by a pressure-loading ring (10).

4. High-temperature seal according to one of Claims 1 to 3, **characterized by** the sealing ring (5) being pressed onto the counter-ring (6) by means of an expansion joint (7), particularly using a pressure-loading ring (10).

5. High-temperature seal according to one of Claims 1 to 4, **characterized by** the sealing ring (5) being clamped to the pressure-loading ring (10).

6. Rotating tubular reactor with a high-temperature seal according to one of Claims 1 to 5, **characterized by** the counter-ring (6) being secured to the reactor drum (15) and the drum rotating during operation.

7. Rotating tubular reactor according to Claim 6, **characterized by** the sealing ring (5) being connected to the stationary part (4).

8. Rotating tubular reactor according to Claim 6 or 7, **characterized by** a high-temperature seal (1) being provided at least at both ends.

## Revendications

1. Garniture d'étanchéité à haute température montée entre une partie rotative (3) tournant autour d'un axe moyen (2) et une partie fixe (4), avec une bague d'étanchéité (5) et une contre-bague (6), où la bague d'étanchéité (5) est inclinée et forme une surface de glissage et d'étanchéité (9) avec la contre-bague (6), cette surface formant un angle droit avec l'axe moyen (2) de la partie rotative (3), **caractérisée en ce que** la bague d'étanchéité (5) et la contre-bague (6) sont fabriquées à base de métal, la bague d'étanchéité (5) étant fixe et la contre-bague (6), qui est montée à la partie rotative (3), tournant autour de l'axe moyen (2) de la partie rotative (3).

2. Garniture d'étanchéité à haute température selon la revendication 1, **caractérisée en ce que** la bague d'étanchéité (5) est fabriquée à base d'un acier haute qualité et la contre-bague (6) à base d'un alliage cuivre-nickel.

3. Garniture d'étanchéité à haute température selon l'une des revendications 1 ou 2, **caractérisée en ce que** la bague d'étanchéité (5) se trouve serrée contre la contre-bague (6) moyennant une bague de serrage (10).

4. Garniture d'étanchéité à haute température selon l'une des revendications 1 à 3, **caractérisée en ce que** la bague d'étanchéité (5) se trouve serrée contre la contre-bague (6) moyennant un compensateur (7), surtout au travers d'une bague de serrage (10).

5. Garniture d'étanchéité à haute température selon l'une des revendications 1 à 4, **caractérisée en ce que** la bague d'étanchéité (5) est coincée à la bague de serrage (10).

6. Réacteur tubulaire rotatif avec garniture d'étanchéité à haute température selon l'une des revendications 1 à 5, **caractérisé en ce que** la contre-bague (6) est fixée au tambour (15) du réacteur et que ce tambour tourne en service.

7. Réacteur tubulaire rotatif selon la revendication 6, **caractérisé en ce que** la bague d'étanchéité (5) est liée à la partie fixe (4).

8. Réacteur tubulaire rotatif selon l'une des revendications 6 ou 7, **caractérisé en ce qu'**une garniture d'étanchéité à haute température (1) est prévue au moins aux deux bouts.
